**Europäisches Patentamt**

**European Patent Office**

**Office européen des brevets**

(19)

(11) Veröffentlichungsnummer : **0 327 864 B1**

(12) **EUROPÄISCHE PATENTSCHRIFT**

(45) Veröffentlichungstag der Patentschrift :
**08.04.92 Patentblatt 92/15**

(51) Int. Cl.⁵ : **F16F 1/36**

(21) Anmeldenummer : **89101019.1**

(22) Anmeldetag : **20.01.89**

(54) **Federelement.**

(30) Priorität : **09.02.88 DE 3803909**

(43) Veröffentlichungstag der Anmeldung :
**16.08.89 Patentblatt 89/33**

(45) Bekanntmachung des Hinweises auf die
Patenterteilung :
**08.04.92 Patentblatt 92/15**

(84) Benannte Vertragsstaaten :
**DE ES FR GB IT**

(56) Entgegenhaltungen :
**EP-A- 0 192 936**
**CH-A- 388 097**
**DE-A- 3 535 897**
**US-A- 2 750 606**
**US-A- 2 775 998**
**US-A- 2 835 313**

(73) Patentinhaber : **WOCO Franz-Josef Wolf & Co.**
**Sprudelallee 19**
**W-6483 Bad Soden-Salmünster (DE)**

(72) Erfinder : **Wolf, Franz-Josef**
**Sprudelallee 19**
**W-6483 Bad Soden-Salmünster (DE)**
Erfinder : **Pletsch, Hubert**
**Am Quellenrain 13**
**W-6483 Bad Soden-Salmünster (DE)**

(74) Vertreter : **Jaeger, Klaus, Dipl.-Chem. Dr. et al**
**Jaeger, Steffens & Köster Patentanwälte**
**Pippinplatz 4a**
**W-8035 München-Gauting (DE)**

## Beschreibung

Die Erfindung betrifft ein Federelement der im Oberbegriff des Patentanspruchs 1 genannten Art.

Probleme, die sich seit jeher beim Abfedern von relativ großen Massen ergeben, betreffen die Erzielung einer möglichst weichen Federung, d. h. einer flachen Federkennlinie, bei möglichst langen Standzeiten der Federelemente. Ein weiteres Augenmerk wird bei der Konstruktion auf die akustische Entkopplung von Auf- und Widerlager gerichtet, die wünschenswerterweise möglichst groß sein soll.

Seit längerem ist daher die Verwendung von elastischen Auflagepuffern im Maschinenbau und speziell im Fahrzeugbau für die Abfederung von z. B. Motoren üblich. Anstelle der ehemals massiven Elastomerblöcke, bei denen aufgrund des notwendigerweise weichen Materials eine relativ rasche Materialermüdung zu verzeichnen war, sind heutzutage Federkörper im Einsatz, die aus bereits relativ festen Elastomeren bestehen und zur Erreichung eines weichen Federeffekts sowie zur Verminderung der Materialbelastung von Hohlkanälen durchzogen sind. Diese Hohlkanäle nehmen beim Zusammenpressen der elastischen Blöcke zum Teil das verdrängte Material auf, d. h. sie dienen als Verformungsraum, so daß die Verformung der Außenkonturen der Blöcke und damit auch die aufgrund der inhomogenen Spannungskonzentration auftretende Materialbelastung reduziert werden können.

Beispielhaft für derartige Puffer ist der in der DE-A-35 35 897 beschriebene Federkörper, der aus einem Elastomerblock besteht, in dem Hohlkanäle die ebenfalls in dem Elastomerblock vorhandenen gleichmäßig verteilten Hohlräume durchsetzen. Die Kanäle bilden Scharen von jeweils in gleichem Abstand parallel zueinander ausgerichteten Kanälen, die in Richtung des Auflastvektors der abzufedernden Masse in übereinanderliegenden Ebenen angeordnet sind, wobei diese durch die Kanalscharen definierten Ebenen horizontal und parallel zueinander ausgerichtet sind, d. h. daß sich die Hohlkanäle weder schneiden noch berühren. Durch eine sukzessiv um einen bestimmten konstanten Winkel gleichsinnig verdrehte Orientierung der jeweils höher liegenden Ebene in Bezug auf die darunter liegende Ebene ergibt sich eine im Raum schraubenartig fortschreitende Konfiguration der Kanäle. Bei einem Winkel von z. B. 90° führt dies zu einer alternierenden Anordnung, in der sich die Kanäle überkreuzen, ohne sich zu schneiden oder zu berühren und die

Hohlräume ein dichtgepacktes kubisches Raumgitter bilden. Diese Gummifedern weisen zwar eine ausgezeichnete akustische Dämpfung, eine weiche Federkennlinie und eine gute mechanische Festigkeit auf, sind jedoch in ihren konstruktiven Einsatzmöglichkeiten durch die horizontale Kanalebenenschichtung eingeschränkt.

Angesichts dieses Standes der Technik liegt der Erfindung die Aufgrabe zugrunde, ein Federelement der eingangs genannten Art so zu verbessern, daß es auch in komplexeren Konstruktionen mit winklig einwirkenden Kräften und für komplexere Funktionen mit gleichzeitiger Eigenstabilisierung gegen Querkräfte eingesetzt werden kann.

Diese Aufgabe wird durch ein Federelement der eingangs genannten Art gelöst, das die in den kennzeichnenden Teilen der Patentansprüche 1 oder 2 grenannten Merkmale aufweist.

Der im Folgenden verwendete Begriff "Raumfläche" soll alle dreidimensionalen Flächen, also beispielsweise gekrümmte oder gewellte Flächen umfassen; zweidimensionale, also ebene Flächen, sollen unabhängig von ihrer Orientierung im Raum nicht darunter fallen.

Das erfindungsgemäße Federelement besteht aus einem Gummiblock, der in seinem Inneren von gleichmäßig verteilten vorzugsweise kugelförmigen Hohlräumen durchsetzt ist. Jeweils mehrere dieser Hohlräume werden durch einen Hohlkanal verbunden. Die kreiszylindrischen oder prismatischen Hohlkanäle sind insgesamt derart dimensioniert, daß der Flächeninhalt ihres lichten Querschnitts mindestens 25% des Flächeninhalts des größten lichten Querschnitts des nächstliegenden von dem jeweiligen Hohlkanal durchsetzten Hohlraums beträgt. Die zumindest einseitig offen ausgebildeten Hohlkanäle bilden Scharen, die in einer ersten Ausführungsform des erfindungsgemäßen Federelements jeweils eine Raumfläche, z.B. eine Kegelmantelfläche oder eine gewellte Fläche, definieren. Diese Raumflächen liegen in Richtung des Auflastvektors übereinander, wobei sie sich weder schneiden noch berühren. In senkrechter Projektion gesehen sind die Hohlkanäle in jeder der Kegelmantelflächen vorzugsweise radial verlaufend und insbesondere mit gleichem Winkelabstand voneinander verteilt angeordnet, ohne sich im Zentrum zu schneiden oder zu berühren.

Durch die Verschachtelung der übereinanderliegenden, gestapelten von jeweils zwei benachbarten kegelmantelförmigen oder gewellten Flächen begrenzten Blocksegmente ergibt sich hierbei eine Stabilisierung des gesamten Federelements gegen seitliches Versetzen des Elastomerblocks bzw. der Blocksegmente. Gegenüber dem bekannten Federkörper ergibt sich daher bei Lasteinwirkung in Richtung der Kegelmittelachse eine verbesserte Formbeständigkeit des Gummiblocks und eine gleichmäßigere Verteilung der einwirkenden Kräfte.

Als weitere Ausgestaltung des erfindungsgemäßen Federelements kann ein zentraler in Richtung des Auflastvektors den Federblock durchlaufender Axialkanal vorgesehen sein. Dieser einseitig oder beidseitig offene Axialkanal ist derart angeordnet, daß sich keiner der Hohlräume oder der Hohlkanäle in diesen zentralen Axialkanal öffnet. Durch diesen zentralen Axialkanal, den eine Stabilisierungs- und Führungsstange durchsetzen kann, kann eine zusätzliche axiale Stabilisierung erreicht werden, die einer seitlichen Verschiebung der einzelnen durch jeweils zwei Kanalscharen begrenzten Bereiche des Elastomerblocks entgegenwirkt. Erstaunlich und für den Fachmann überraschend ist, daß durch diesen zentralen Axialkanal weder die Federeigenschaften des Federelements noch dessen akustische Eigenschaften beeinträchtigt werden. Im Gegenteil, in vielen Fällen kann sogar eine Verbesserung der akustischen Entkopplung zwischen Auflager und Widerlager festgestellt werden.

Eine andere Ausgestaltung des erfindungsgemäßen Federelements sieht vor, daß die jeweiligen Kanalscharen ebene Flächen definieren, die ebenfalls übereinander , aber schräg zur Richtung des Auflastvektors liegen und untereinander parallel angeordnet sind, so daß sie sich weder schneiden noch berühren. Entsprechend könnten auch die bereits genannten gewellten Flächen schräg zur Richtung des Auflastvektors ausgerichtet sein. Die einzelnen Hohlkanäle sind dabei in der senkrechten Projektion jeder Fläche vorzugsweise ebenfalls parallel zueinander ausgerichtet. Durch die beim vorliegenden Ausführungsbeispiel in Richtung des Auflastvektors schräge Anordnung der Hohlkanäle ergibt sich im Gegensatz zu der aus dem Stand der Technik bekannten horizontalen Ausrichtung der Kanalebenen eine zusätzliche Richtungskomponente der Materialversetzung entlang der durch die Kanalscharen definierten schrägen Ebenen. Die Verformung des Elastomers erfolgt also sowohl durch die Gleitbewegung der untereinander parallelen jeweils von zwei benachbarten schrägen Ebenen begrenzten Blocksegmente als auch durch eine innere Verformung der Hohlräume und Hohlkanäle. Wesentlich bleibt dabei jedoch die aufgrund der Schräglage der Kanäle auftretende Verlängerung der Materialversetzungswege. Das Ausmaß der Verformung des Blocks bzw. seiner Außenkonturen ist überraschenderweise relativ gering, und im Vergleich zu den sonst hinzunehmenden Wulstbildungen durchaus tolerierbar.

Durch diese gleichmäßige Verteilung der lastbedingten Verformungskräfte kann insgesamt die Materialbeanspruchung reduziert werden und gleichzeitig das Federverhalten noch weicher gestaltet werden, d. h. ein flacherer Verlauf der Federkennlinie erhalten werden. Gleichzeitig können Querkräfte kompensiert werden, die zwischen Auflager und Widerlager auftreten. Entsprechend kann alternativ ein härteres Elastomer eingesetzt werden, ohne Einbußen im Federverhalten hinnehmen zu müssen. Die Standzeit der Federelemente kann daher insgesamt bei gleichem effektiven Kennlinienverlauf verlängert werden.

Die Erfindung ist anhand von zwei Ausführungen in Verbindung mit den Zeichnungen näher erläutert. Hierbei zeigen:

Fig. 1 in schematischer Darstellung einen horizontalen Schnitt durch ein erfindungsgemäßes Federelement nach I-I in Fig. 2;

Fig. 2 einen vertikalen Schnitt nach II-II in Fig. 1;

Fig. 3 in schematischer Darstellung einen horizontalen Schnitt durch eine zweite Ausführungsform des erfindungsgemäßen Federelements nach III-III in Fig. 4; und

Fig. 4 einen vertikalen Schnitt nach IV-IV in Fig. 3.

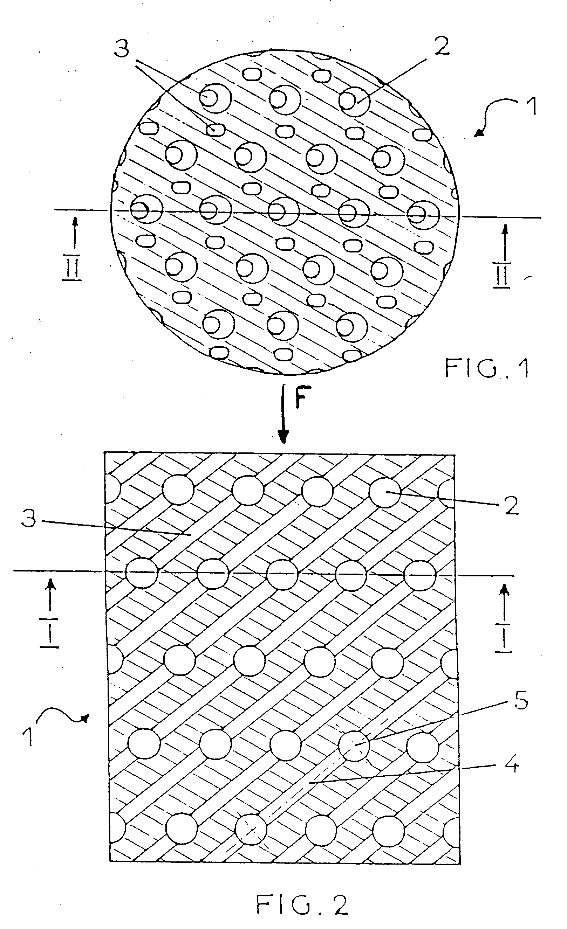

In dem in Fig. 1 und 2 gezeigten blockförmigen und aus einem elastischen Material bestehenden Federelement 1 sind gleichmäßig über den gesamten Körper kugelförmige Hohlräume 2 so verteilt, daß sie auf den Plätzen eines rhomboedrischen Raumgitters liegen. Diese Hohlräume 2 sind von untereinander parallelen sich nicht berührenden zylindrischen Hohlkanälen 3 durchsetzt. Die Kanäle 3 bilden Scharen, die jeweils schräg zur Richtung des Auflastvektors F, der in Fig. 1 senkrecht zur Zeichenebene und in Fig. 2 in der Zeichenebene senkrecht von oben nach unten verläuft, übereinanderliegende Ebenen definieren, die wiederum parallel zu einander verlaufend ausgerichtet sind, d. h. , daß sich die Kanäle weder schneiden noch berühren. Die Mittelachsen 4 der Kanäle 3 verlaufen dabei durch die Mittelpunkte 5 der kugelförmigen Hohlräume 2. Jeder der Kanäle 3 durchsetzt mehrere Hohlräume 2, wobei der Durchmesser der Hohlräume 2 größer als der Durchmesser der Kanäle 3 ist, aber höchstens das Vierfache beträgt. Der Abstand der einzelnen von einem Kanal 3 durchsetzten Hohlräume 2 ist jeweils gleich. Die den gesamten Block durchlaufenden Hohlkanäle 3 sind einseitig oder beidseitig offen augebildet.

Bei Kompression des Federelements wird das verdrängte Elastomer durch die im Federblock enthaltenen Hohlräume und Kanäle aufgenommen, wobei die Materialbelastung durch die Gleitbewegung der durch jeweils zwei Kanalscharen begrenzten Blocksegmente entlang der durch diese Kanalscharen definierten Ebenen vermindert wird.

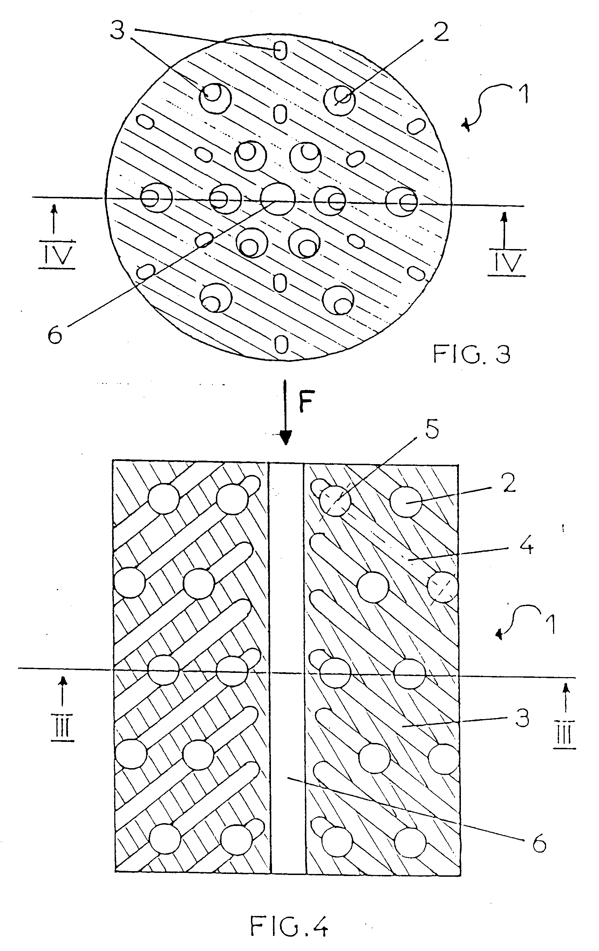

In der in den Fig. 3 und 4 gezeigten Ausführungsform des erfindungsgemäßen Federelements 1 definieren die einzelnen Kanalscharen anstelle der schräg angeordneten Ebenen des in den Fig. 1 und 2 gezeigten Beispiels Raumflächen in Form von Kegelmantelflächen. Diese Kegelmantelflächen sind in Richtung des Auflastvektors räumlich so übereinander angeordnet, daß ihre Kegelspitzen auf der in Richtung des Auflastvektors verlaufenden Zentralachse des Gummiblocks liegen, wobei sie sich ebenfalls weder schneiden noch berühren. Die Kanäle 3 einer einzelnen Kanalschar (Kegelmantelfläche) sind in der senkrechten Projektion gesehen

EP 0 327 864 B1

radial und insbesondere mit gleichem Winkelabstand voneinander ausgerichtet, wobei sie sich im Zentrum weder schneiden noch berühren. Sie sind daher nur einseitig nach außen offene und nach innen geschlossene Sackkanäle. Wahlweise kann in dieser Ausführungsform des erfindungsgemäßen Federelements ein zentraler in Richtung des Auflastvektors verlaufend ausgerichteter Axialkanal 6 vorgesehen sein. Dieser zentrale Axialkanal 6 ist zumindest einseitig geöffnet und schneidet oder berührt keinen der Hohlräume 2 bzw. der Hohlkanäle 3, so daß die Sackform der Kanäle 3 erhalten bleibt.

Bei bestimmungsgemäßem Gebrauch des Federelements 1 wird der Elastomerblock in Richtung seiner Längsachse belastet, wobei das verdrängte Elastomermaterial durch die Hohlräume 2, 3 und 6 innerhalb des Elastomerblocks aufgenommen wird. Durch die Kegelstruktur der übereinanderliegenden, jeweils von zwei Kanalscharen begrenzten Blocksegmente wird gleichzeitig eine formbedingte Stabilisierung gegen seitliches Versetzen der Blocksegmente erreicht.

Die akustische Entkopplung zwischen Auflager und Widerlager wird durch die Schräganordnung der durch die Kanalscharen gebildeten Ebenen bzw. durch die von den Kanalscharen definierten Raumflächen sowie durch den zentralen Axialkanal verbessert, und zwar sowohl aufgrund einer Vergrößerung der Streuereffekte in den Hohlräumen, als auch durch eine bessere Unterbrechung direkter akustischer Leitungswege.


**Patentansprüche**

1. Federelement aus Gummi, bei dem in einem Gummiblock Hohlkanäle (3) ausgebildet sind, die ebenfalls in dieser Gummimatrix gleichmäßig verteilt angeordnete Hohlräume (2) durchsetzen, wobei die Hohlkanäle (3) in Richtung eines bestimmungsgemäß einwirkenden Auflastvektors (F) in räumlich übereinanderliegenden und einander weder schneidenden noch berührenden Flächen angeordnet sind,
dadurch **gekennzeichnet,**
daß diese durch eine bestimmte Kanalmenge definierten Flächen Raumflächen und keine Ebenen sind.

2. Federelement aus Gummi, bei dem in einem Gummiblock Hohlkanäle (3) ausgebildet sind, die ebenfalls in dieser Gummimatrix gleichmäßig verteilt angeordnete Hohlräume (2) durchsetzen, wobei die Hohlkanäle (3) untereinander parallel verlaufend in Richtung eines bestimmungsgemäß einwirkenden Auflastvektors (F) in räumlich übereinanderliegenden und einander weder schneidenden noch berührenden Ebenen angeordnet sind,
dadurch **gekennzeichnet,**
daß diese durch eine bestimmte Kanalmenge definierten Ebenen zur Eigenstabilisierung des Federelementes gegen Querkräfte schräg zur Richtung des Auflastvektors (F) ausgerichtet sind, wobei die Ebenen schräg zur Auflager - und widerlagerfläche des Federelementes verlaufen.

3. Federelement nach Anspruch 1,
dadurch **gekennzeichnet,**
daß die Flächen Kegelmantelflächen sind.

4. Federelement nach Anspruch 1,
dadurch **gekennzeichnet,**
daß die Flächen gleichmäßig gewellte Flächen sind.

5. Federelement nach einem der Ansprüche 1 bis 4,
dadurch **gekennzeichnet,**
daß der Flächeninhalt des lichten Querschnitts der Hohlkanäle (3) mindestens 25% des Flächeninhalts des größten lichten Querschnitts des nächstliegenden, von diesem Hohlkanal (3) durchsetzten Hohlraumes (2) beträgt.

6. Federelement nach einem der Ansprüche 1 bis 5,
dadurch **gekennzeichnet,**
daß die Hohlräume (2) Kugelgestalt haben und die Hohlkanäle (3) kreiszylindrisch oder prismatisch konfiguriert sind.

7. Federelement nach einem der Ansprüche 1 bis 6,
dadurch **gekennzeichnet,**
daß die Hohlkanäle (3) in jeder der übereinanderliegenden Flächen in senkrechter Projektion parallel zueinander ausgerichtet sind.

8. Federelement nach einem der Ansprüche 1 bis 6,
dadurch **gekennzeichnet,**
daß die Hohlkanäle (3) in jeder der übereinanderliegenden Flächen in senkrechter Projektion gesehen radial verlaufend und insbesondere mit gleichem Winkelabstand voneinander verteilt angeordnet sind, ohne daß sie sich im Zentrum schneiden oder auch nur berühren.

4

9. Federelement nach einem der Ansprüche 1 bis 8,
dadurch **gekennzeichnet**,
daß in dem Gummiblock ein in Richtung des Auflastvektors (F) verlaufender beidseitig offener oder einseitig geschlossener zentraler Axialkanal (6) ausgebildet ist.

10. Federelement nach Anspruch 9,
dadurch **gekennzeichnet**,
daß sich keiner der Hohlkanäle (3) in den zentralen Axialkanal (6) hinein öffnet.

11. Federelement nach einem der Ansprüche 1 bis 10,
dadurch **gekennzeichnet**,
daß die Hohlkanäle (3) zumindest einseitig offen ausgebildet sind und sich untereinander nicht schneiden.

## Claims

1. Spring element made of rubber, in which are formed in a rubber block hollow channels (3) which pass through cavities (2) likewise arranged distributed uniformly in this rubber matrix, the hollow channels (3) being arranged in the direction of a load vector (F) of intended action in surfaces lying spatially above one another and neither intersecting nor touching one another,
characterised in that
these surfaces defined by a specific quantity of channels are spatial surfaces and not planes.

2. Spring element made of rubber, in which are formed in a rubber block hollow channels (3) which pass through cavities (2) likewise arranged distributed uniformly in this rubber matrix, the hollow channels (3) being arranged so as to extend parallel to one another in the direction of a load vector (F) of intended action in planes lying spatially above one another and neither intersecting nor touching one another,
characterised in that
these planes defined by a specific quantity of channels are aligned obliquely relative to the direction of the load vector (F) for the inherent stabilisation of the spring element against transverse forces, the planes extending obliquely relative to the bearing and abutment surface of the spring element.

3. Spring element according to Claim 1,
characterised in that
the surfaces are cone-envelope surfaces.

4. Spring element according to Claim 1,
characterised in that
the surfaces are uniformly corrugated surfaces.

5. Spring element according to one of Claims 1 to 4,
characterised in that
the surface content of the clear cross-section of the hollow channels (3) amounts to at least 25% of the surface content of the largest clear cross-section of the nearest cavity (2) through which this hollow channel (3) passes.

6. Spring element according to one of Claims 1 to 5,
characterised in that
the cavities (2) have a spherical shape and the hollow channels (3) are of circular-cylindrical or prismatic configuration.

7. Spring element according to one of Claims 1 to 6,
characterised in that,
in vertical projection, the hollow channels (3) in each of the mutually superposed surfaces are aligned parallel to one another.

8. Spring element according to one of Claims 1 to 6,
characterised in that,
as seen in vertical projection, the hollow channels (3) in each of the mutually superposed surfaces are arranged extending radially and especially distributed at an equal angular distance from one another, without intersecting or even only touching one another at the centre.

9. Spring element according to one of Claims 1 to 8,
characterised in that
a central axial channel (6) extending in the direction of the load vector (F) and open on both sides or closed on one side is formed in the rubber block.

10. Spring element according to Claim 9,
characterised in that
none of the hollow channels (3) opens into the central axial channel (6).

11. Spring element according to one of Claims 1 to 10,
characterised in that
the hollow channels (3) are made open on at least one side and do not intersect one another.

## Revendications

1. Organe formant ressort, en caoutchouc, pour lequel, dans un bloc de caoutchouc, sont réalisés des canaux creux (3) traversant des volumes creux (2) répartis, de même, régulièrement dans cette matrice de caoutchouc, étant entendu que ces canaux creux (3) sont disposés, suivant la direction d'un vecteur d'application de la charge (F) ayant une direction déterminée, dans des surfaces disposées les unes au desssus des autres dans l'espace, mais ne se coupant pas, ni ne se touchant pas,
caractérisé en ce que
ces surfaces, définies par une certaine quantité de canaux, sont des surfaces à trois dimensions et ne sont pas des plans.

2. Organe formant ressort, en caoutchouc, pour lequel, dans un bloc de caoutchouc, sont réalisés des canaux creux (3) traversant des volumes creux (2) répartis, de même, régulièrement dans cette matrice de caoutchouc, étant entendu que ces canaux creux (3) sont disposés parallèlement les uns aux autres, suivant la direction d'un vecteur d'application de la charge (F) ayant une direction déterminée, dans des plans disposés les uns au desssus des autres dans l'espace, et ne se coupant pas, ni ne se touchant pas,
caractérisé en ce que
ces plans, définis par une quantité déterminée de canaux, ont une direction inclinée par rapport à la direction du vecteur d'application de la charge (F), pour auto-stabiliser l'organe formant ressort contre des forces transversales, étant entendu que les plans ont une direction inclinée par rapport à la surface d'appui et de réaction de l'organe formant ressort.

3. Organe formant ressort suivant la revendication 1,
caractérisé en ce que
les surfaces sont des surfaces coniques.

4. Organe formant ressort suivant la revendication 1,
caractérisé en ce que
les surfaces sont des surfaces à ondulations régulières.

5. Organe formant ressort suivant l'une quelconque des revendications 1 à 4,
caractérisé en ce que
le volume intérieur compris dans la surface de la section ouverte des canaux creux (3) représente au moins 25 % du volume intérieur compris dans la surface de la plus grande section ouverte du volume creux (2) le plus proche, traversé par ce canal creux (3).

6. Organe formant ressort suivant l'une quelconque des revendications 1 à 5,
caractérisé en ce que
les volumes creux (2) ont une forme sphérique et en ce que les canaux creux (3) ont une forme cylindrique ou prismatique.

7. Organe formant ressort suivant l'une quelconque des revendications 1 à 6,
caractérisé en ce que
les canaux creux (3), dans chacune des surfaces situées les unes au dessus des autres, ont des directions parallèles entre elles en projection verticale.

8. Organe formant ressort suivant l'une quelconque des revendications 1 à 6,
caractérisé en ce que,
vu en projection verticale, les canaux creux (3), dans chacune des surfaces situées les unes au dessus des autres, sont disposés avec une direction radiale et sont répartis avec le même écartement angulaire les uns par rapport aux autres, sans qu'ils se recoupent au centre, ou même seulement se touchent.

9. Organe formant ressort suivant l'une quelconque des revendications 1 à 8,
caractérisé en ce que,
dans le bloc de caoutchouc, suivant la direction du vecteur d'application de la charge (F), est réalisé un canal axial (6) central, ouvert des deux côtés, ou fermé sur un côté.

10. Organe formant ressort suivant la revendication 9,
caractérisé en ce qu'
aucun des canaux creux (3) ne débouche dans le canal axial central (6).

11. Organe formant ressort suivant l'une quelconque des revendications 1 à 10,
caractérisé en ce que

les canaux creux (3) sont réalisés ouverts sur au moins un côté et ne se recoupent pas les uns les autres.

FIG. 1

FIG. 2

FIG. 3

FIG.4